# EUROPÄISCHE PATENTSCHRIFT

(11) **EP 1 410 954 B1**
(45) Veröffentlichungstag und Bekanntmachung des Hinweises auf die Patenterteilung: **21.11.2007**
(21) Anmeldenummer: 03018207.5
(22) Anmeldetag: 09.08.2003
(51) Int. Cl.: B60R 19/18

(54) **Stossfänger für ein Kraftfahrzeug**
Bumper for a vehicle
Pare-chocs pour automobiles

(30) Priorität: 18.10.2002 DE 10248637
(43) Veröffentlichungstag der Anmeldung: 21.04.2004
(73) Patentinhaber: Dr.Ing. h.c. F. Porsche Aktiengesellschaft, 70435 Stuttgart (DE)
(72) Erfinder: Reutlinger, Peter, 75438 Knittlingen (DE); Palmer, Eberhard, 71665 Vaihingen (DE); Piede, Andreas, 75428 Illingen (DE)

(56) Entgegenhaltungen:
- EP-A- 1 125 798
- CH-A- 689 638
- DE-U- 9 313 297
- US-A- 6 141 935
- US-A1- 2003 038 488

## Beschreibung

Die Erfindung bezieht sich auf einen Stoßfänger, insbesondere auf einen Heckstoßfänger für ein Kraftfahrzeug nach dem Oberbegriff des Anspruchs 1.

Aus der DE 199 04 879 A1 ist ein Stoßfänger für ein Fahrzeug bekannt, der über deformierbare Halteelemente mit einem Fahrzeugaufbau verbunden ist und der Stoßfänger aus einem Profil gleichen Querschnitts mit innenliegenden durchgehenden Verstärkungsrippen besteht. Desweiteren ist aus der US 5,577,796 eine Stoßstange für ein Kraftfahrzeug bekannt, die unterschiedliche Querschnittsflächen aufweist und mit parallel verlaufenden faltbaren Seitenwänden versehen ist. Aus der gattunsgemäßen EP 1 125 798 ist ein Stoßfängerquerträger bekannt, der über endseitige Halteelemente am Fahrzeugaufbau abgestützt ist. Dieser Stoßfängerquerträger besteht aus einem polygonalen geschlossenen Profil, welcher in einer Mittenlängsebene des Fahrzeugs ein steifes Abstützelement aufweist und die hierzu benachbarten Bereiche des Stoßgängerquerträgers sind deformierbar oder faltbar ausgeführt.

Die Aufgabe der Erfindung besteht darin, einen verbesserten Stoßfänger für ein Kraftfahrzeug zu schaffen, der einerseits bereichsweise steif ausgeführt ist und andererseits aber auch deformierbar ist.

Diese Aufgabe wird erfindungsgemäß durch die Merkmale des Patentanspruchs 1 gelöst. Weitere vorteilhafte Merkmale beinhalten die Unteransprüche.

Die mit der Erfindung hauptsächlich erzielten Vorteile bestehen darin, daß der Stoßfänger im Mittenbereich und/oder endseitig so steif ausgeführt ist, daß bei einem Heckcrash keine Beschädigung einer Heckklappe des Fahrzeugs erfolgen kann und diese auch nach dem Crash noch zu öffnen ist. Der Stoßfängerquerträger besteht aus einem polygonalen, geschlossenem Profil gleichen Querschnitts der am Fahrzeugaufbau endseitig über steife Halteelemente abgestützt ist. In einer Mittenlängsebene des Fahrzeugs ist im Querträger wenigstens ein steifes Abstützelement angeordnet, wobei die hierzu benachbarten Bereiche des Querträgers deformierbar bzw. faltbar ausgebildet sind.

Insbesondere ist nach der Erfindung vorgesehen, dass sich das Profil des Querträgers aus einem dem Fahrzeugaufbau zugerichteten rechteckförmigen ersten Profilteil und einem sich anschließenden trapezförmigen zweiten Profilteil zusammensetzt wobei die sich gegenüberstehenden Wandungen der Profilteile jeweils einen bogenförmigen Einzug mit einem Maß a aufweisen. Hierdurch wird erreicht, daß bei einem Aufprall sich die Stoßstange im Mittenbereich steif verhält, aber seitlich des Abstützelements bis zu den Halteelementen sich der Querträger falten bzw. deformieren kann.

Damit eine optimale Steifigkeit des Querträgers in dem Bereich erzielt wird, in welchem das Abstützelement angeordnet ist, erreicht wird, besteht dieser aus X-förmig ausgestalteten Stegen, die sich mit ihren freien Enden jeweils in Eckkanten der Profilteile abstützen und ein Scheitelpunkt der Stege des Abstützelements etwa in einer Verbindungsebene der beiden Teilprofile liegt. Durch dieses X-förmig ausgebildete Abstützelement wird eine Krafteinleitung in die steifen Ecken des Profils erreicht, so daß das Abstützelement nicht ausweichen kann; zudem erfolgt die Einleitung der Kraft noch über eine schmale Fläche bzw. über eine geringe Spreizung der X-förmigen Stege im trapezförmigen Profilteil.

Nach einer weiteren Ausführung der Erfindung ist vorgesehen, daß ein Abstützelement in der Mittenlängsachse des Fahrzeugs und mindestens weitere Abstützelemente auch jeweils endseitig des Stoßfängerquerträgers angeordnet sein können und zwischen diesen Abstützelementen der Querträger deformierbar bzw. faltbare Bereiche aufweist.

Ein Ausführungsbeispiel der Erfindung ist in den Zeichnungen dargestellt und wird im folgenden näher beschrieben.

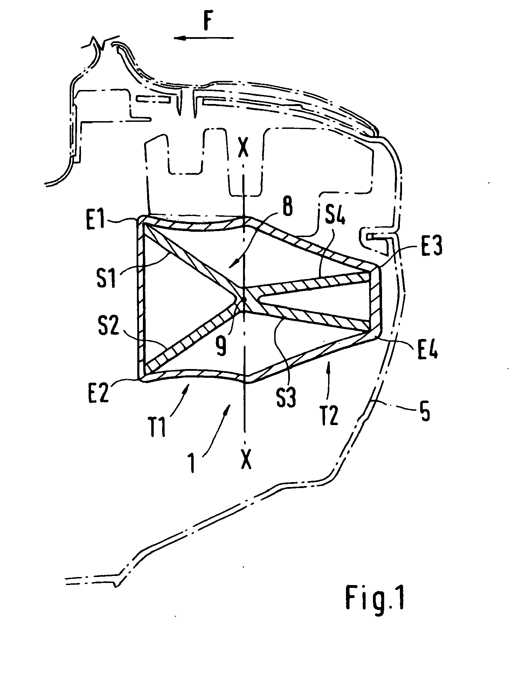

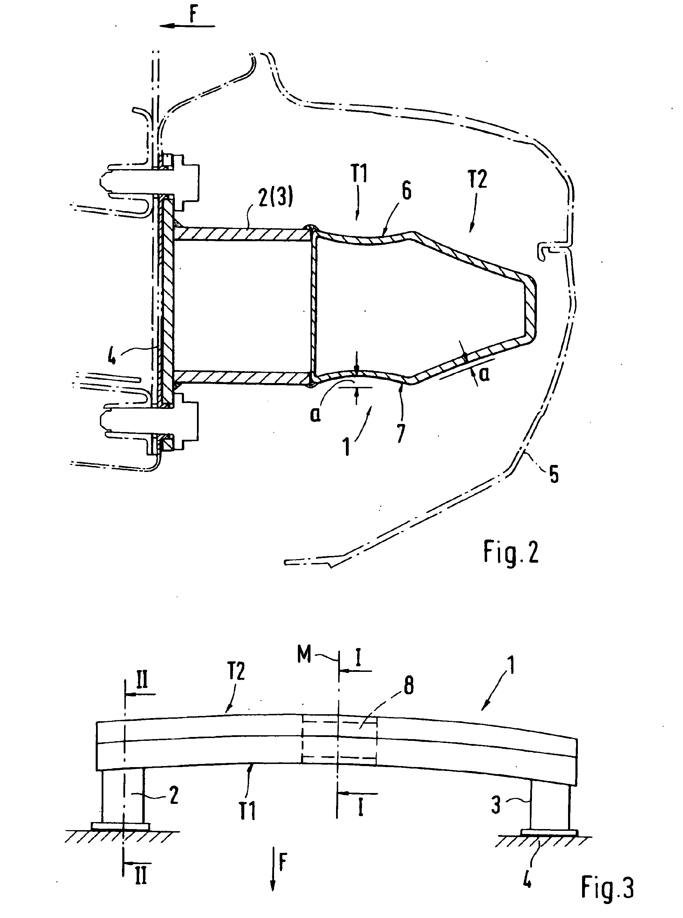

Es zeigen
- Fig. 1: einen Querschnitt durch eine Heckschürze eines Fahrzeugaufbaus mit innenliegendem Stoßfängerquerträger und mit einem Abstützelement nach Linie I-I der Fig. 3,
- Fig. 2: einen Querschnitt durch den Stoßfängerquerträger mit endseitig angeordneten Halteelementen nach Linie II-II der Fig. 3 und
- Fig. 3: den Stoßfängerquerträger in einer Draufsicht mit den steifen Halteelementen gesehen.

Ein Stoßfängerquerträger 1 für ein Kraftfahrzeug, welches am Heck angeordnet ist, erstreckt sich quer zum Fahrzeug und ist über steife Halteelemente 2, 3 mit dem Fahrzeugaufbau 4 verbunden.

Der Querträger 1 besteht im wesentlichen aus einem Hohlprofil, das über die gesamte Länge einen gleichen polygonalen Querschnitt aufweist. Im Querschnitt besteht das Profil aus einem ersten rechteckförmigen Profilteil T1 und einem sich daran anschließenden trapezförmigen zweiten Profilteil T2.

Das rechteckförmige Profilteil T1 ist dem Fahrzeugaufbau 4 unmittelbar zugerichtet, wobei das trapezförmige Profilteil T2 sich entgegen der Fahrtrichtung F erstreckt und einer abdeckenden Heckschürze 5 zugerichtet ist.

Das Profil T1, T2 des Querträgers 1 weist in seinen gegenüberliegenden Wandungen 6 und 7 jeweils einen bogenförmigen Einzug mit dem Maß a auf, damit bei einem Crash eine Deformation bzw. Faltung des Querträgers 1 in diesen Bereichen nicht behindert wird.

Innerhalb des Querträgers 1 ist im Bereich der Mittenlängsachse M des Fahrzeugs ein Abstützelement 8 angeordnet, das aus einem Profil mit X-förmig ausgestalteten Stegen S1 bis S4 besteht. Diese Stege S1 und S2 stützen sich in den Eckkanten E1 und E2 des rechteckförmigen Teilprofils T1 und die weiteren Stege S3 und S4 stützen sich in den Eckkanten E3 und E4 des trapezförmigen Profilteils T2 ab. Die einzelnen Stege S1 bis S4 sind in einem Scheitelpunkt 9 miteinander verbunden, der in etwa in einer Verbindungsebene X-X der beiden Profilteile T1 und T2 liegt.

Nach einer weiteren Ausführung der Erfindung können weitere Abstützelemente 8 auch endseitig des Stoßfängerquerträgers 1 angeordnet sein.

## Patentansprüche

1. Stoßfänger, insbesondere Heckstoßfänger, für ein Kraftfahrzeug mit einem querverlaufenden Stoßfängerquerträger (1), der über endseitige Halteelemente (2, 3) am Fahrzeugaufbau (4) abgestützt ist und aus einem polygonalen, geschlossenem Profil gleichen Querschnitts besteht, und in einer Mittenlängsebene (M) des Fahrzeugs im Sotßfängerquerträger (1) wenigstens ein steifes Abstützelement (8) aufweist, wobei die hierzu benachbarten Bereiche des Stoßfängerquerträgers (1) deformierbar oder faltbar ausgebildet sind, **dadurch gekennzeichnet, dass** das Profil des Stoßfängerquerträgers (1) sich aus einem dem Fahrzeugaufbau (4) zugerichteten rechteckförmigen ersten Profilteil (T1) und einem sich hieran anschließenden trapezförmigen zweiten Profilteil (T2) zusammensetzt und die sich gegenüberstehenden Wandungen (6, 7) der Profilteile (T1 und T2) jeweils einen bogenförmigen Einzug mit einem Maß (a) aufweisen und dass das Abstützelement (8) aus x-förmig ausgestalteten Stegen (S1 bis S4) besteht, die sich mit ihren freien Enden jeweils in Eckkanten (E1 und E) bzw. (E3 und E4) der Profilteile (T1 und T2) abstützen und ein Scheitelpunkt (9) der Stege des Absützelements (8) etwa in einer Verbindungsebene (X-X) der beiden Teilprofile (T1 und T2) liegt.

2. Stoßfänger nach Anspruch 1, **dadurch gekennzeichnet, dass** im Stoßfängerquerträger (1) mindestens zwei äußere Abstützelemente (8) angeordnet sind und zwischen diesen Abstützelementen (8) im Querträger (1) deformierbare oder faltbare Bereiche ausgebildet sind.

3. Stoßfänger nach den Ansprüchen 1 oder 2, **dadurch gekennzeichnet, dass** das Abstützelement (8) aus einem Strangpressprofil besteht.

## Claims

1. A bumper, especially a rear bumper, for a motor vehicle, with a transversely extending bumper crossbeam (1) which is supported on the vehicle body (4) via end holding members (2, 3) and consists of a polygonal, closed profile of uniform cross-section and has at least one rigid supporting member (8) in the bumper crossbeam (1) in a longitudinal central plane (M) of the vehicle, wherein the regions of the bumper crossbeam (1) adjacent to said supporting member (8) are formed so as to be deformable or collapsible, **characterised in that** the profile of the bumper crossbeam (1) is assembled from a rectangular first profiled part (T1) facing the vehicle body (4) and an adjacent, trapezoidal second profiled part (T2), and the opposing walls (6, 7) of the profiled parts (T1 and T2) each have a curved indentation of a size (a), and **in that** the supporting member (8) consists of ribs (S1 to S4) which are arranged in the shape of an x and are each supported by their free ends in corners edges (E1 and E2) and (E3 and E4) of the profiled parts (T1 and T2), and a vertex (9) of the ribs of the supporting member (8) lies approximately in a connecting plane (X-X) between the two profiled parts (T1 and T2).

2. A bumper according to claim 1, **characterised in that** at least two outer supporting members (8) are arranged in the bumper crossbeam (1), and deformable or collapsible regions are formed in the crossbeam (1) between these supporting members (8).

3. A bumper according to claim 1 or claim 2, **characterised in that** the supporting member (8) consists of an extruded section.

## Revendications

1. Pare-chocs, en particulier pare-chocs arrière, pour un véhicule automobile avec un longeron de pare-chocs (1) s'étendant transversalement qui s'appuie sur la carrosserie du véhicule (4) par l'intermédiaire d'éléments de fixation (2, 3) du côté des extrémités et qui est constitué d'un profilé polygonal fermé ayant une section transversale identique, et qui comporte au moins un élément d'appui rigide (8) dans le longeron de pare-chocs (1) dans un plan longitudinal médian (M) du véhicule, les zones du longeron de pare-chocs (1) adjacentes à celui-ci étant déformables ou pliables, **caractérisé en ce que** le profilé du longeron de pare-chocs (1) est composé d'une première partie de profilé (T1) de forme rectangulaire orientée vers la carrosserie du véhicule (4) et d'une seconde partie de profilé (T2) de forme trapézoïdale raccordée à celle-ci et les parois opposées (6, 7) des parties de profilé (T1 et T2) comportent chacune un renfoncement en forme d'arc avec une cote (a) et **en ce que** l'élément d'appui (8) est constitué d'entretoises (S1 à S4) réalisées en forme de x qui s'appuient chacune avec leurs extrémités libres sur des arêtes d'angle (E1 et E2) ou (E3 et E4) des parties de profilé (T1) et (T2) et un point culminant (9) des entretoises de l'élément d'appui (8) se trouve à peu près dans un plan de liaison (X-X) des deux parties de profilé (T1) et (T2).

2. Pare-chocs selon la revendication 1, **caractérisé en ce qu'**au moins deux éléments d'appui extérieurs (8) sont disposés dans le longeron de pare-chocs (1) et des zones déformables ou pliables sont réalisées entre ces éléments d'appui (8) dans le longeron (1).

3. Pare-chocs selon la revendication 1 ou 2, **caractérisé en ce que** l'élément d'appui (8) est constitué par un profilé extrudé.
